# NEW EUROPEAN PATENT SPECIFICATION

(11) **EP 3 497 273 B2**
(45) Date of publication and mention of the opposition decision: **25.06.2025**
(45) Mention of the grant of the patent: 06.04.2022
(21) Application number: 17737252.1
(22) Date of filing: 06.07.2017
(51) Int. Cl.: D03D 47/27

(54) **GRIPPER BAND AND GRIPPER UNIT FOR A GRIPPER WEAVING MACHINE**
GREIFERBAND UND GREIFEREINHEIT FÜR EINE GREIFERWEBMASCHINE
BANDE DE PINÇAGE ET UNITÉ DE PINÇAGE POUR MÉTIER À TISSER À PROJECTILES

(30) Priority: 11.08.2016 BE 201600134
(43) Date of publication of application: 19.06.2019
(73) Proprietor: Picanol, 8900 Ieper (BE)
(72) Inventor: MOENECLAEY, Denis, 8840 Oostnieuwkerke-Staden (BE); BALLYN, Patrick, 8970 Poperinge (BE)
(74) Representative: Patentanwälte Ruff, Wilhelm, Beier, Dauster & Partner mbB
(86) International application number: PCT/EP2017/066888
(87) International publication number: WO 2018/028899

(56) References cited:
- EP-A1- 0 412 453
- DE-A1- 102004 049 254
- JP-A- 2002 146 648

## Description

### TECHNICAL FIELD AND PRIOR ART

The invention relates to a gripper band for a gripper weaving machine, wherein the gripper band comprises a first part and a second part, wherein the first part of the gripper band is flexible for allowing the gripper band to be wound along a drive wheel, and wherein the second part of the gripper band is adapted to carry a gripper. The invention further relates to a gripper unit comprising a gripper band and a gripper mounted to the second part of the gripper band.

A gripper band for moving a gripper through the shed of a gripper weaving machine having a flexible first part adapted to cooperate with a drive wheel and a more rigid second part adapted to cooperate with a gripper body is shown for example in US 3,299,911, wherein the flexible first part is fixed to a surface or sole of the gripper body.

DE 10 2004 049 254 A1 shows a gripper band having a basic body with a rectangular cross-section, wherein two longitudinal grooves are provided at a bottom surface of the basic body.

EP 0 412 453 A1 shows a gripper band, wherein two longitudinal ribs are provided close to the two sides at a bottom side of the gripper band, wherein the height of the ribs decreases towards a front end of the gripper band, whereas a thickness of the gripper band in the region between the longitudinal ribs remains constant.

### SUMMARY OF THE INVENTION

It is an object of the invention, to provide a gripper band having a first flexible part and a second part adapted to carry a gripper, which allows for a secure guiding of the gripper through the shed and which can sustain forces. It is a further object to provide a respective gripper unit.

This object is solved by a gripper band with the features of claim 1, and by a gripper unit with the features of claim 15. Further advantageous embodiments are described in the dependent claims.

According to a first aspect, a gripper band for a gripper weaving machine is provided, wherein the gripper band comprises a first part and a second part, wherein the first part is flexible for allowing the gripper band to be wound along a drive wheel, wherein the second part is adapted to carry a gripper, wherein the first part and the second part both have a basic body with a rectangular cross-section with a bottom surface, a top surface and two side surfaces, wherein two longitudinal ribs are provided close to the two sides of the gripper band at a bottom side of the second part, which longitudinal ribs protrude at least from the bottom surface of the basic body of the second part, the gripper band comprising the first part, the second part, and the longitudinal ribs is one single, integral structure formed of a composite material, wherein a thickness of the basic body of the second part near a centerline of the gripper band is larger than a thickness of the basic body of first part near the centerline of the gripper band, and wherein the bottom surface of the basic body of the second part is offset from the bottom surface of the basic body of the first part and/or the top surface of the basic body of the second part is offset from the top surface of the basic body of the first part, so that near the centerline the thickness of the basic body of the second part is larger than the thickness of the basic body of the first part.

According to the invention, a low-weight gripper band is provided having a thin first part with a low bending stiffness and a second part with longitudinal ribs and with a higher bending stiffness adapted to carry a gripper, in particular adapted to receive fastening elements for mounting a gripper, and adapted to guide the gripper band.

In the context of the application, the term composite material refers to a material made from two or more constituent materials having different physical and/or chemical properties. Composite materials are composed in particular of a number of layers of impregnated fabric bounded on top of each other to form a whole.

The gripper band formed as one single, integral structure from composite material has a homogeneous structure, this means a structure of the same nature or composition. Joints, in particular glued joints, and/or connection surfaces between individual parts of the gripper band and/or between different materials used when forming prior art gripper bands, which typically are weak points of an element along which in use fractures may occur due to vibrations, bending forces, shear stresses, stress concentrations or other loads, are avoided.

In preferred embodiments, the longitudinal ribs have a starting section at the first part, and extend at least into a front end of the first part. This allows for a reliable guidance of the gripper band at the height of the tip of the gripper band where the gripper is arranged. Preferably the longitudinal ribs start at least essentially from a section of the first part, located closest to a tip of the gripper band, which is still adapted to be used for driving the gripper band by means of the drive wheel. The first part is adapted to be used for driving the gripper band. In other words, in use, when the gripper band is fully retracted by the drive wheel, the longitudinal ribs extend up to the drive wheel, but the longitudinal ribs themselves are not bent along the drive wheel. In this case, the longitudinal ribs allow for a good guiding of the gripper band in the vicinity of the gripper without the necessity to bend the gripper band in the region of the longitudinal ribs in use when the gripper band is driven with the drive wheel.

In preferred embodiments, the first part of the gripper band is provided with a row of holes arranged near the centerline of the gripper band, which holes are adapted to cooperate with teeth provided at the drive wheel, wherein the row of holes ends in a section of the gripper band, which is closer to the tip of the gripper band than the starting section of the longitudinal ribs. In preferred embodiments, the last hole used for driving the gripper band is the hole of which the longitudinal position coincides at least essentially with the starting section of the longitudinal ribs. However, further holes can be provided in a region towards the top, for allowing the teeth of the drive wheel to enter at least partly in these holes upon bringing the gripper band towards its fully retracted position. In other embodiments, the row of holes is extended by a slit provided in said region to avoid an interference of the gripper band with the teeth of the drive wheel.

In an embodiment, the bottom surface of the basic body of the second part is offset from the bottom surface of the basic body of the first part, so that the thickness of the basic body of the second part near the centerline, that is arranged between the two longitudinal ribs, is larger than the thickness of the basic body of the first part near the centerline. In other words, the gripper band is enlarged at its bottom side.

In an embodiment, a transition part is provided between the first part and the second part, wherein a bottom surface of the transition part is at least in a portion offset from the bottom surface of the basic body of the first part for increasing a thickness of the gripper band. In other words, the lower surface groove extends the bottom surface of the first part. By increasing the thickness of the gripper band in at least one side region adjacent to the lower surface groove, a surface for guiding the gripper band in the transition part is increased. In an embodiment, the row of holes is punched into the gripper band by means of a punching machine.

In a preferred embodiment, in the transition portion a lower surface groove is provided near the centerline, wherein an upper boundary surface of the lower surface groove is at the same level as the bottom surface of the basic body of the first part. In this case, the punching machine can be moved along the bottom side of the gripper band, wherein the lower surface groove allows the punching machine to be moved towards a front end of the gripper band for forming holes in the transition part without any interference with the gripper band.

In order to avoid abrupt transitions, in an embodiment the transition part comprises at least one inclined surface for continuously increasing the thickness of the gripper band in side regions adjacent to the lower surface groove.

In an embodiment, the top surface of the basic body of the second part and the top surface of the basic body of the first part are arranged at the same level. In other words, the gripper band has a smooth top surface. In this case, for forming a row of holes that extends up to a region of the gripper band having a larger thickness than the first part, this means the second part and/or the transition part, a punching machine may possibly also be moved along the top side of the gripper band. Possibly a lower surface groove can at least partly be omitted.

In alternative or in addition to the enlargement of the gripper band at the bottom side, in an embodiment a top surface of the basic body of the second part is offset from the top surface of the basic body of the first part, so that the thickness of the basic body of the second part is larger than the thickness of the basic body of the first part. In other words, the gripper band is enlarged at least near the centerline at its top side.

When enlarging the gripper band at the top side, in an embodiment a transition part is provided between the first part and the second part, wherein a top surface of at least a portion of the transition part is offset from the top surface of the basic body of the first part for increasing a thickness of the gripper band. Preferably in said portion an upper surface groove is provided near the centerline, wherein a lower boundary surface of the upper surface groove is at the same level as the top surface of the basic body of the first part. In other words, the upper surface groove extends the top surface of the first part. This allows for a manufacturing of a gripper band with a row of holes extending up to the transition part and/or the second part by moving a punching machine along the top side of the gripper band, wherein the upper surface groove allows the punching machine to be moved towards a front end of the gripper band without any interference with the gripper band in regions having an increased thickness. In order to avoid abrupt transitions, the transition part in preferred embodiments comprises at least one inclined surface for continuously increasing the thickness of the gripper band in side regions adjacent to the upper surface groove.

In an embodiment, the top surface and the bottom surface of the basic body of the second part are both offset from the top surface and the bottom surface of the basic body of the first part. The two offsets in an embodiment are identical in height and position, so that, apart from the longitudinal ribs, the gripper band has mirror symmetry. In other embodiments, the two offsets differ in height and/or position.

The second part is adapted for mounting a gripper to the second part. In preferred embodiments, for this purpose the second part is provided with mounting holes for receiving fastening elements, in particular screws, for mounting a gripper.

In an embodiment, the longitudinal ribs are provided with inclined entry surfaces extending from the bottom surface of the first part.

The gripper band is one single, integral structure formed in one piece. In an embodiment, the gripper band is formed from a suitable composite material. In an embodiment, the composite material is made of bound prepreg-layers, in particular a composition of prepreg-carbon-layers. The prepreg-layers can be arranged on top of each other. In an embodiment, some prepreg-layers having carbon-fibers that are arranged in parallel to each other in longitudinal direction and other prepreg-layers having carbon fibers that are arranged in parallel to each other at an angle to the longitudinal direction, in particular perpendicular to the longitudinal direction.

In preferred embodiments, the composite material is made of bound prepreg-layers, in particular bound reinforced prepreg-layers. In the context of the application, prepreg-layers are defined as layers from a fabric with carbon-fiber, polyester, glass material, aramid, cotton or combinations thereof, which are impregnated with a matrix material, in particular with a resin such as epoxy. For example, carbon fibers are arranged in straight state in the longitudinal direction, which carbon fibers are kept at distance from each other by means of thin glass fibers or polyester fibers, which is also called unidirectional reinforcement. According to an alternative, carbon fibers can be arranged in two directions substantially perpendicularly to each other, which is also called bidirectional reinforcement. Preferably a woven fabric is used, but according to an alternative a non-woven fabric can be used. In case the layer comprises carbon-fiber, the pre-impregnated layers are also called prepreg-carbon-layers. The stacked layers are treated by thermal treatment and/or pressure treatment for example in an autoclave, a press and/or an oven for forming a composite material having specific properties. In an embodiment, the thus formed composite material has a plate shape and is cut, sawed, milled or otherwise processed for forming the one-piece gripper band. In other embodiments, the layers are cut in form and thereafter bound together. In still another embodiment, a continuous system can be applied.

In preferred embodiments, a number of prepreg-layers of the composite material are arranged in parallel to each other, so that the whole upon bending or folding of layers does not buckle or crack. This buckling or cracking may result in undefined material properties. In case the composite material comprises an embedded fibrous material, for example a unidirectional embedded fibrous material, fibers of the fibrous material of different layers may have the same or different orientations, depending on the intended properties.

According to a second aspect, a gripper unit for a gripper weaving machine comprising a gripper and a gripper band with a first part and a second part, which gripper band is one single, integral structure formed of composite material is provided, wherein the gripper is mounted to the second part. In an embodiment, the gripper is mounted to the top surface of the second part.

In an embodiment, the gripper is provided with additional guide elements. The gripper in an embodiment protrudes from a front end of the gripper band, wherein in particular embodiments the gripper unit further comprises a guide element extending in the prolongation of the gripper band, wherein the guide element is mounted to the gripper. The gripper itself may further comprise replaceable components.

### BRIEF DESCRIPTION OF THE DRAWINGS

Further characteristics and advantages of the invention will emerge from the following description of the embodiments schematically illustrated in the drawings. Throughout the drawings, the same elements will be denoted by the same reference numerals. In the drawings:
Figure 1 is schematic front view of a gripper weaving machine comprising two gripper bands;
Figure 2 is a perspective view from the top of a gripper band;
Figure 3 is a perspective view from the bottom of the gripper band of Figure 2;
Figure 4 is a cross-sectional view of a first part of the gripper band of Figure 2 with a guide;
Figure 5 is a cross-sectional view of a transition part of the gripper band of Figure 2 with a guide;
Figure 6 is a cross-sectional view of a second part of the gripper band of Figure 2 with a guide;
Figure 7 is a sectional view near a centerline of a second embodiment of a gripper band similar to the gripper band of Figure 2 with a gripper unit;
Figure 8 is a perspective view from the bottom of a third embodiment of a gripper band similar to Figure 3;
Figure 9 is a cross-sectional view of a first part of the gripper band of Figure 8 with a guide;
Figure 10 is a cross-sectional view of a transition part of the gripper band of Figure 8 with a guide;
Figure 11 is a cross-sectional view of a second part of the gripper band of Figure 8 with a guide;
Figure 12 is a sectional view near a centerline of a fourth embodiment of a gripper band similar to Figures 8 to 11 with a gripper unit;
Figure 13 is a sectional view near a centerline of a fifth embodiment of a gripper band similar to Figure 7;
Figure 14 is a cross-sectional view of a first part of the gripper band of Figure 13 with a guide;
Figure 15 is a cross-sectional view of a transition part of the gripper band of Figure 13 with a guide;
Figure 16 is a cross-sectional view of a second part of the gripper band of Figure 13 with a guide;
Figure 17 is a perspective view from the top of a sixth embodiment of a gripper band similar to Figure 2;
Figure 18 is a perspective view from the bottom of a seventh embodiment of a gripper band similar to Figure 8;
Figure 19 is a schematic representation of layers for a gripper band.

### DETAILED DESCRIPTION OF EMBODIMENTS OF THE INVENTION

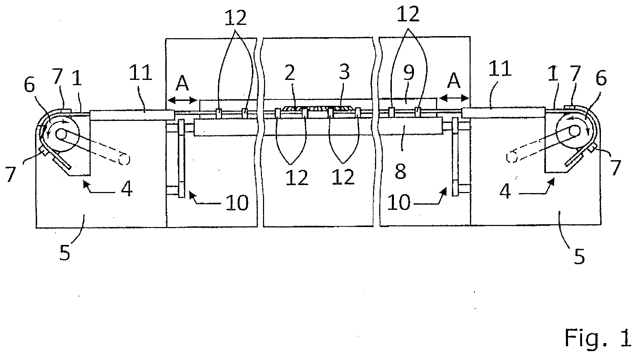

Figure 1 is schematic front view of a gripper weaving machine comprising two gripper bands 1. One of the two gripper bands 1 carries a gripper 2, the so-called bringer gripper, which brings a weft thread from one side of the weaving machine to approximately the middle of the weaving machine. The other gripper band 1 carries a gripper 3, the so-called receiver gripper, which takes the weft thread from the bringer gripper approximately at the middle of the weaving machine and moves the weft thread to the opposite side of the weaving machine. Driving devices 4 for the gripper bands 1 are provided in the region of side frames 5. These driving devices 4 each include a drive wheel 6 for moving a respective one of the gripper bands 1 in the longitudinal direction A. Guide blocks 7 are assigned to the drive wheels 6 to hold the gripper bands 1 against the drive wheels 6. A sley 8 is supported in the side frames 5 and supports a reed 9. The sley 8 is provided with drives 10.

Stationary guides 11 are mounted laterally outside the shed, in particular next to the reed 9, between the drive wheels 6 and the sley 8, so as to guide the gripper bands 1 towards the shed. In addition, a number of moveable guides 12 are mounted to the sley 8 and are moved by a movement of the sley 8 into and out of the shed. These moveable guides 12 guide the gripper bands 1 opposite the reed 9 inside the shed.

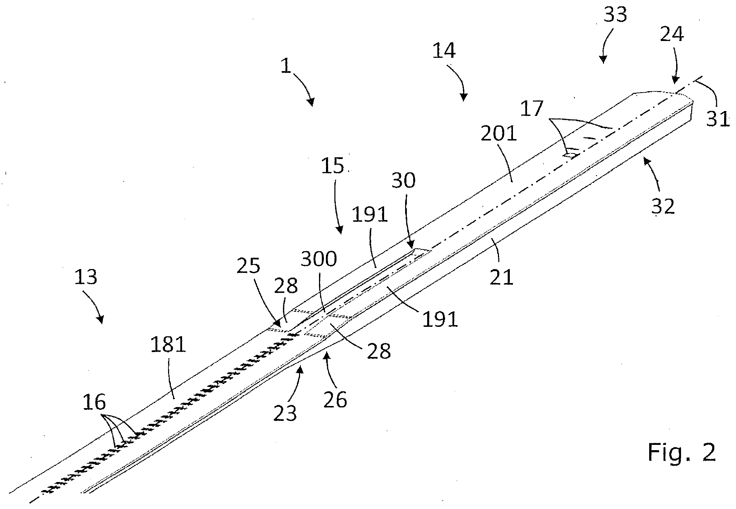

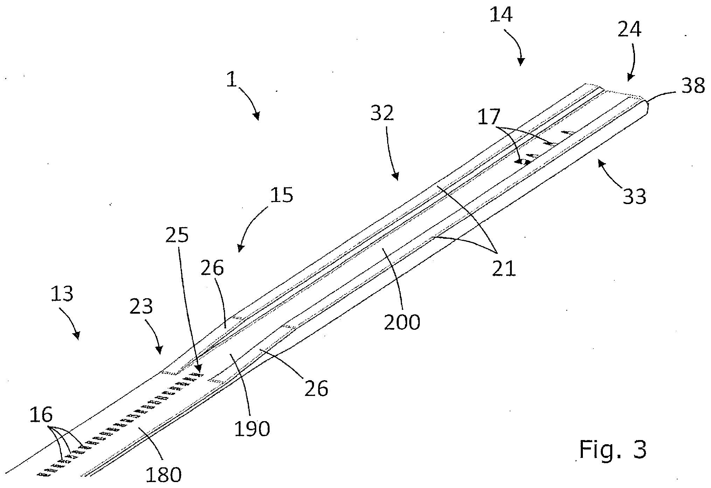

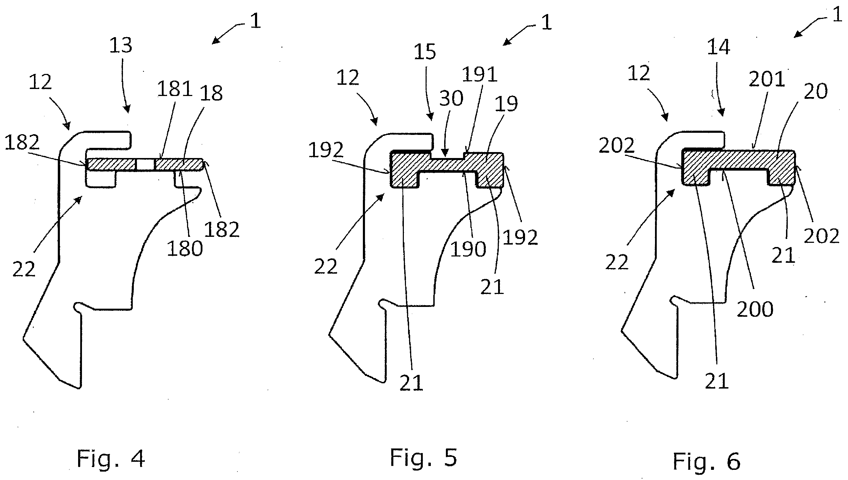

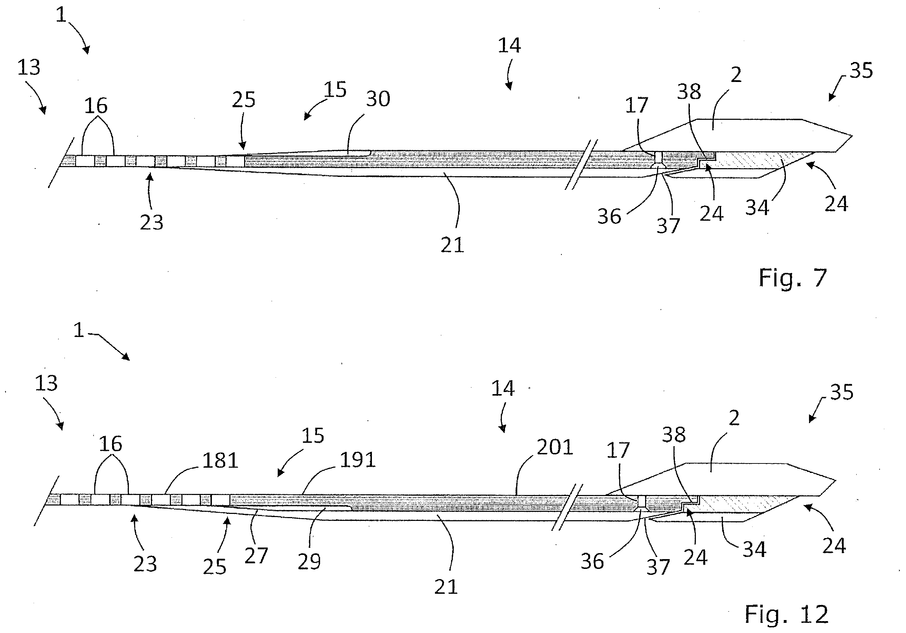

Figure 2 is a schematic perspective view from the top of a front end of a first embodiment of a gripper band 1 for the gripper weaving machine of Figure 1. Figure 3 is a schematic perspective view from the bottom of the front end of the gripper band 1 of Figure 2. The gripper band 1 shown has a first part 13, a second part 14, and a transition part 15 arranged between the first part 13 and the second part 14. Figures 4 to 6 show different cross-sections of the gripper band 1 guided in guides 12, more in particular cross-sections of the first part 13, the transition part 15 and the second part 14, respectively. Figure 7 shows a sectional view of a similar gripper band 1 near a centerline 31 (see Figure 2) with a gripper unit 35.

The first part 13 of the gripper band 1 has a low bending stiffness and is flexible for allowing the gripper band 1 to be wound along the drive wheel 6 as shown in Figure 1. The first part 13 of the gripper band 1 is further provided with a row of holes 16 near the centerline 31 of the gripper band 1. The holes 16 are adapted to cooperate with teeth (not shown) provided at the drive wheel 6 (see Figure 1) for driving the gripper band 1. A drive wheel 6 with teeth is known amongst others from US 4,564,053 and US 5,669,423.

The second part 14 is adapted to carry a gripper 2, 3 (see Figure 1). In the embodiment shown, the second part 14 is provided with a number of mounting holes 17, which mounting holes 17 are adapted to receive fastening elements, such as screws for mounting the gripper.

As best seen in the cross-sections of Figures 3 to 6, the first part 13, the transition part 15 and the second part 14 each have a basic body 18, 19, 20, with an at least essentially rectangular cross-section with a bottom surface 180, 190, 200, a top surface 181, 191, 201, and two side surfaces 182, 192, 202. The gripper band 1 is further provided with two longitudinal ribs 21 protruding from the bottom surfaces 200, 190 of the second part 14 and the transition part 15. The two longitudinal ribs 21 are provided at the bottom side 32 close to the two sides of the gripper band 1. The longitudinal ribs 21 are used for guiding the gripper band 1 in respective grooves 22 provided on the guide 12. As best seen in Figure 3, in the embodiment shown the longitudinal ribs 21 start at a starting section 23 of the first part 13 and extend in the longitudinal direction of the gripper band 1 from the first part 13 to the second part 14. In the embodiment shown, the longitudinal ribs 21 extend essentially up to a tip 24 of the gripper band 1. A front of the longitudinal ribs 21 is inclined with respect to a front face 38 of the basic body of the gripper band 1.

The starting section 23 of the longitudinal ribs 21 in the embodiment shown coincides at least approximately with the section of the first part 13 adapted to be used for driving and guiding the gripper band 1 by means of the drive wheel 6 (see Figure 1), which is closest to the tip 24. More particular, in case the gripper band 1 is in a fully retracted position, a tooth of the drive wheel 6 (see Figure 1) that points at least essentially upwards is engaged with holes 16 arranged in the region of the starting section 23. In the embodiment shown, the row of holes 16 ends approximately at the height of the starting section 23 of the longitudinal ribs 21.

In the embodiment shown, the longitudinal ribs 21 are provided with inclined entry surfaces 26 extending from the bottom surface 180 of the first part 13.

The thickness near the centerline of the basic body 20 of the second part 14 is larger than the thickness of the basic body 18 of the first part 13. Due to the increased thickness, the bending stiffness in the second part 14 is higher than in the first part 13. Further, the increased thickness allows for a reliable mounting of the gripper 2, 3 (see Figure 1) at the second part 14. The increased thickness is also advantageous to obtain larger guiding surfaces of the gripper band 1, which guiding surfaces can be guided by the stationary guides 11 and by the moveable guides 12 (see Figure 1). Larger guiding surfaces are advantageous to avoid wear.

For increasing the thickness, in the embodiment shown in Figures 2 to 6, the top surface 201 of the basic body 20 of the second part 14 is offset from the top surface 181 of the basic body 18 of the first part 13. The bottom surface 200 of the basic body 20 of the second part 14 is at least approximately at the same level as the bottom surface 180 of the basic body 18 of the first part 13. In other words, the thickness of the gripper band 1 is not enlarged at its bottom side 32 and is enlarged at its top side 33.

Enlarging the thickness of the basic body 20 of the second part 14 with respect to the thickness of the basic body 18 of the first part 13 is advantageous for guiding the gripper band 1 in the stationary guides 11 as well as in the moveable guides 12.

In the transition part 15, the top surface 191 of the basic body 19 is also offset from the top surface 181 of the basic body 18 of the first part 13, wherein inclined surfaces 28 are provided at a beginning of the transition part 15 for continuously increasing a thickness of the transition part 15. In the embodiment shown, the starting section of the inclined surfaces 28 at least essentially coincides with a section 25 of the gripper band 1 in the region of the hole 16 closest to the tip 24. At a top side shown in Figure 2, in the transition part 15 an upper surface groove 30 is provided near the centerline 31, wherein a lower boundary surface 300 of the upper surface groove 30 is at the same level as the top surface 181 of the basic body 18 of the first part 13.

In the second embodiment as shown in Figure 7, a gripper unit 35 is attached to the gripper band 1. The gripper unit 35 comprises a guide element 34 arranged in the prolongation of the gripper band 1, wherein the guide element 34 is mounted in the prolongation of the tip 24 of the gripper band 1 to the gripper 2, 3. The gripper 2 is mounted to the gripper band 1 by means of screws 36. The guide element 34 is fixed to the gripper 2 by means of screws (not shown) in order to be exchangeable. The gripper band 1 is similar to the gripper band 1 shown in Figures 2 to 6 and is also provided with an upper surface groove 30 and longitudinal ribs 21. In this embodiment, the longitudinal ribs 21 also have an inclined front face 37. The front face 38 of the basic body of the gripper band 1 is stepped. In an alternative embodiment, an inclined or a straight front face is provided.

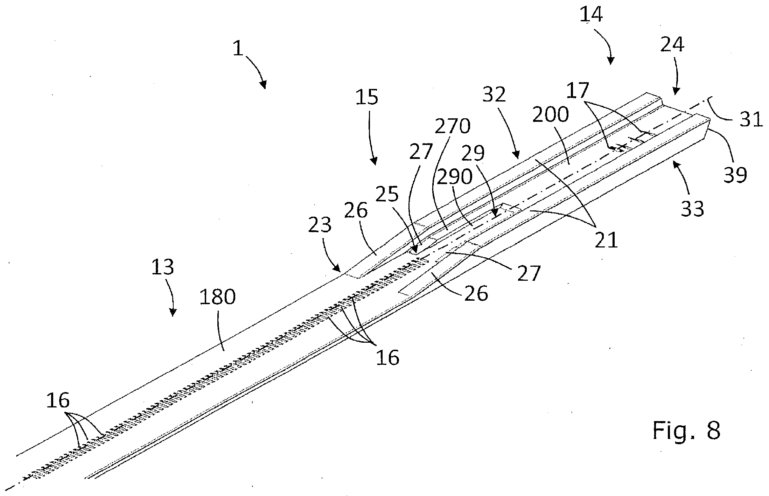

Figures 8 to 11 show a third embodiment of a gripper band 1 similar to the gripper band 1 shown in Figures 2 to 6 with a first part 13, a second part 14 and a transition part 15. The same or similar elements are denoted by the same reference numerals. In contrast to the first embodiment, a thickness of the gripper band 1 is enlarged at its bottom side 32 and is not enlarged at its top side 33. In the embodiment of Figures 8 to 11, in the transition part 15, at the bottom side 32, a lower surface groove 29 is provided near the centerline 31, wherein an upper boundary surface 290 of the lower surface groove 29 is at the same level as the bottom surface 180 of the basic body 18 of the first part 13. In this embodiment, a thickness of the basic body 20 of the second part 14 and a thickness of the basic body 19 of the transition part 15 is larger than a thickness of the basic body 18 of the first part 13. Hence, in the transition part 15 side regions 270 are formed adjacent to the lower surface groove 29 having an increased thickness compared to the basic body 18 of the first part 13. Inclined surfaces 27 are provided at a beginning of the transition part 15 for continuously increasing a thickness in the transition part 15. In the embodiment shown, the row of holes 16 ends in a section 25 of the gripper band 1, which is closer to the tip 24 than the starting section 23 of the longitudinal ribs 21.

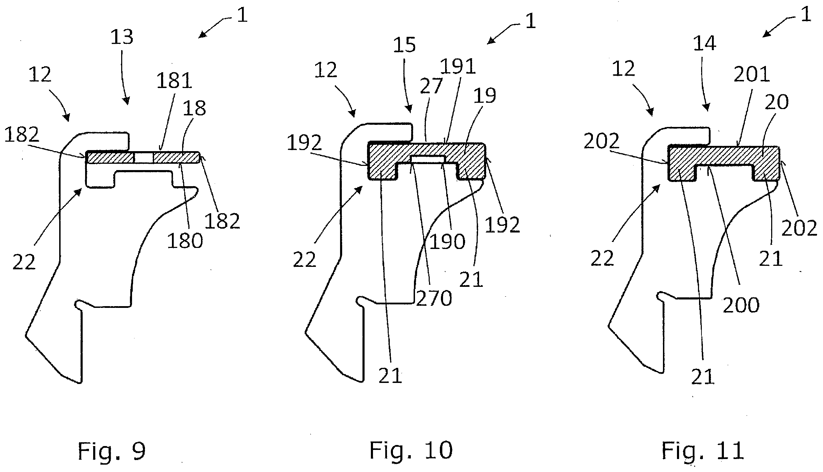

A thickness of the basic body 20 of the second part 14 is larger than a thickness of the basic body 18 of the first part 13, wherein as best seen in Figures 9 to 11, the top surface 201 of the basic body 20 of the second part 14 is at the same level as the top surface 181 of the basic body 18 of the first part 13 and the bottom surface 200 of the basic body 20 of the second part 14 is offset from the bottom surface 180 of the basic body 18 of the first part 13 to increase the thickness.

As shown in Figure 8, in this embodiment the longitudinal ribs 21 end at the tip 24, wherein an approximately straight front face 39 is provided. In an alternative embodiment, an inclined or a stepped front face is provided.

Figure 12 shows a cross-section of a fourth embodiment of a gripper band 1 similar to Figures 8 to 11, wherein a gripper unit 35 as shown in Figure 7 is fixed to the gripper band 1. In the embodiment shown in Figure 12, the gripper band 1 is similarly to the gripper band shown in Figures 8 to 11, enlarged at its bottom side 32 and not enlarged at its top side 33 and comprises a lower surface groove 29. In this embodiment the top surfaces 181, 191 and 201 extend in a planar surface. Such a planar surface of the gripper band 1 can easily be guided by the stationary guides 11 and the moveable guides 12. In the embodiment shown in Figure 12 the longitudinal ribs 21 do not extend up to the tip 24, but end shortly before the tip 24, and the gripper band 1 comprises a stepped front face 38.

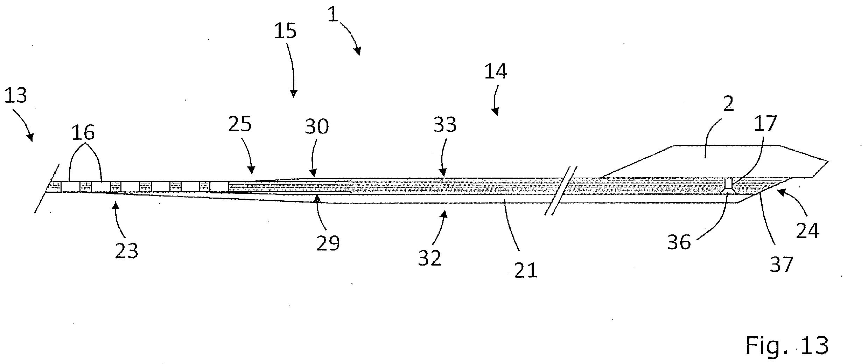

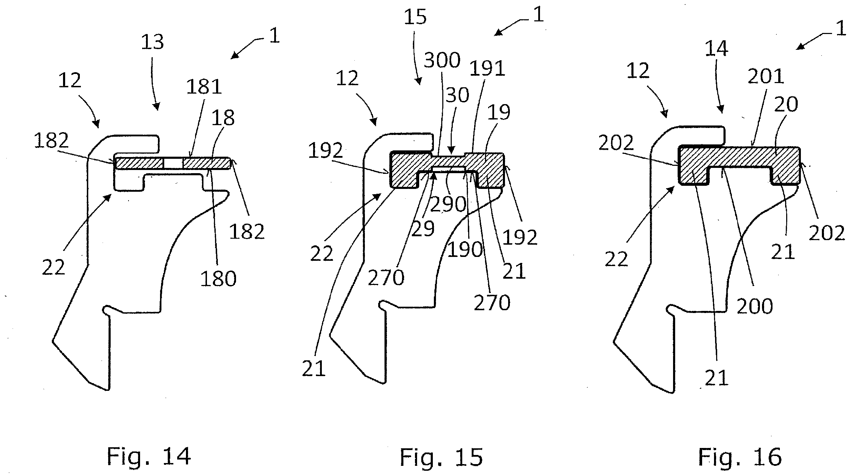

Figures 13 to 16 show a fifth embodiment of a gripper band 1 similar to the gripper band 1 shown in Figures 2 to 6 with a first part 13 having a row of holes 16 adapted to cooperate with a drive wheel 6 (see Figure 1), a second part 14 having mounting holes 17 adapted to carry a gripper 2, 3 (see Figure 1) and a transition part 15. Figure 13 is a sectional view of a fifth embodiment of a gripper band 1 similar to Figure 7, wherein no guide element 34 is provided. Figures 14 to 16 are a cross-sectional view of the first part 13, of the transition part 15 and of the second part 14 of the gripper band 1 of Figure 13, respectively.

As best seen in Figures 14 to 16, the first part 13, the transition part 15 and the second part 14 all have a basic body 18, 19, 20 with a rectangular cross-section with a bottom surface 180, 190, 200, a top surface 181, 191, 201 and two side surfaces 182, 192, 202. The bottom surface 200 of the basic body 20 of the second part 14 and the bottom surface 190 of the basic body 19 of the transition part 15 are both offset from the bottom surface 180 of the basic body 18 of the first part 13. The top surface 201 of the basic body 20 of the second part 14 and the top surface 191 of the basic body 19 of the transition part 15 are both offset from the top surface 181 of the basic body 18 of the first part 13. The transition part 15 has further an upper surface groove 30 and a lower surface groove 29. Side regions 270 are formed adjacent to the lower surface groove 29 having an increased thickness compared to the bottom surface 180 of the basic body 18 of the first part 13. The bottom surface 180 is at the same level as the upper boundary surface 290 of the lower surface groove 29. The top surface 181 of the basic body 18 is at the same level as the lower boundary surface 300 of the upper surface groove 30.

The second part 14 is provided with two longitudinal ribs 21. The longitudinal ribs 21 start in a starting section 23 of the first part 13 and extend in the longitudinal direction of the gripper band 1 towards the second part 14.

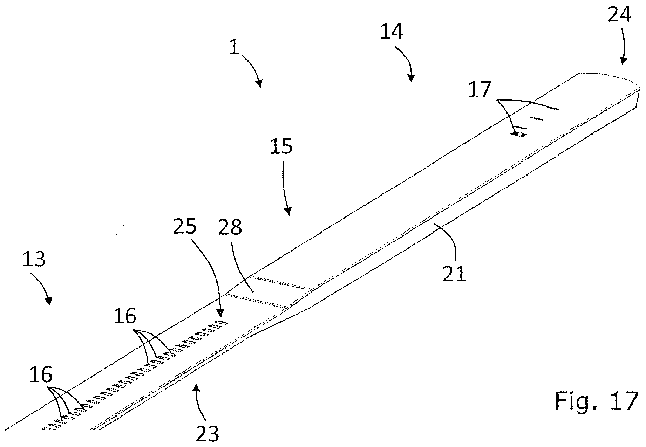

Figure 17 is a perspective view from the top of a sixth embodiment of a gripper band 1 similar to the gripper band shown in Figures 2 to 6. In contrast to the embodiment shown in Figures 2 to 6 no upper surface groove 30 is provided at the transition part 15. A starting section of the inclined surface 28 of the transition part 15 does not coincide with a section 25 of the gripper band 1 in the region of the hole 16 closest to the tip 24. Rather, the inclined surface 28 of the transition part 15 is arranged at a certain distance from the holes 16 towards to the tip 24 to allow a punching tool to be moved along the gripper band 1 towards the tip 24 during manufacturing.

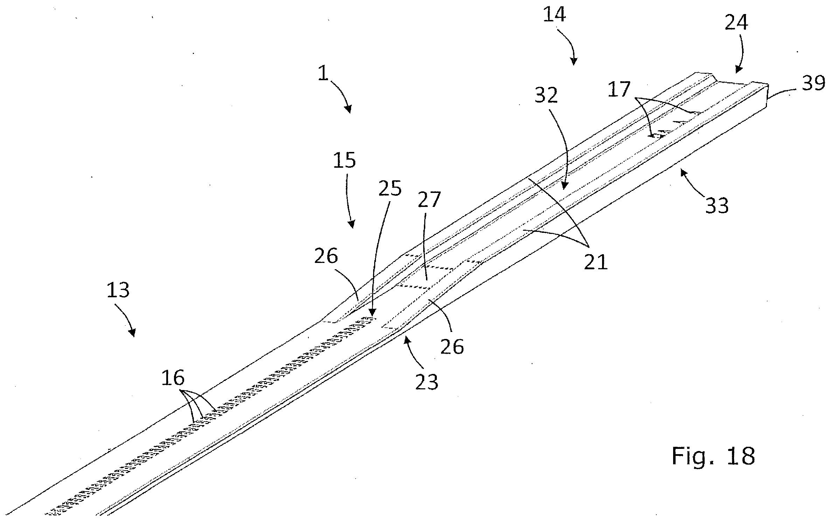

Figure 18 is a perspective view from the bottom of a seventh embodiment of a gripper band 1 similar to the gripper band shown in Figures 8 to 11 with a first part 13, a transition part 15 and a second part 14. In contrast to the embodiment shown in Figures 8 to 11 no lower surface groove 29 is provided at the transition part 15. A starting section of the inclined surface 27 of the transition part 15 does not coincide with a section 25 of the gripper band 1 in the region of the hole 16 closest to the tip 24. Rather, the inclined surface 27 of the transition part 15 is arranged at a certain distance from the holes 16 towards to the tip 24 to allow a punching tool to be moved along the gripper band 1 towards the tip 24 during manufacturing.

As shown in Figure 18, the longitudinal ribs 21 start in a starting section 23 at the first part 13 and extend in the longitudinal direction of the gripper band 1 to the second part 14. In the embodiment shown in Figure 18, the longitudinal ribs 21 end at the tip 24, wherein an approximately straight front face 39 is provided. In an alternative embodiment, an inclined or a stepped front face is provided.

In the embodiments shown, a punching tool of a punching machine for punching the holes 16 can be moved along the top surfaces 181, 191 and the bottom surfaces 180, 190 for providing a row of holes 16 that ends in a section 25 which is closer to the tip 24 than the starting section 23 of the longitudinal ribs 21. In the embodiments shown in Figures 2 to 16, the lower surface groove 29 and/or the upper surface groove 30 allow a punching tool of a punching machine used for forming the holes 16 to be moved past the first part 13 towards a tip 24 of the gripper band 1 without the punching tool of the punching machine interfering with parts of the gripper band 1 having an increased thickness. In particular in the embodiment of Figure 8, a punching machine for punching the holes 16 can be moved along the bottom surfaces 180, 190 for providing a row of holes 16 that ends at a section 25 which is closer to the tip 24 than the starting section 23 of the longitudinal ribs 21. The lower surface groove 29 and/or the upper surface groove 30 also allows the gripper band 1, in particular the transition part 15 of the gripper band 1, to have an increased thickness over a long length in the longitudinal direction of the gripper band 1.

For avoiding abrupt transitions, the longitudinal ribs 21 have inclined entry surfaces 26. In the embodiments of Figures 8, 17 and 18, the transition part 15 has inclined surfaces 27 and/or inclined surfaces 28 arranged closer to the tip 24 than the entry surfaces 26.

The gripper band 1 comprising the first part 13, the second part 14, the transition part 15 and the longitudinal ribs 21 is one single, integral structure formed of a composite material. As best schematically indicated in the sectional view of Figures 7, 12 and 13, in the embodiments shown the gripper band 1 is composed of several bound prepreg-layers, also named plies, arranged in parallel on top of each other. In preferred embodiments, a plate of a composite material is formed by arranging several prepreg-carbon-layers on each other and treating the thus formed stack by a thermal cycle and/or a pressure cycle in function of time in an autoclave-oven and/or a press, for example a heated press. The thus obtained composite material is processed, in particular milled, sawed and/or cut for forming the gripper band 1 having a first part 13 and a thicker second part 14, two longitudinal ribs 21, and a transition part 15 with surface grooves and/or inclined surfaces.

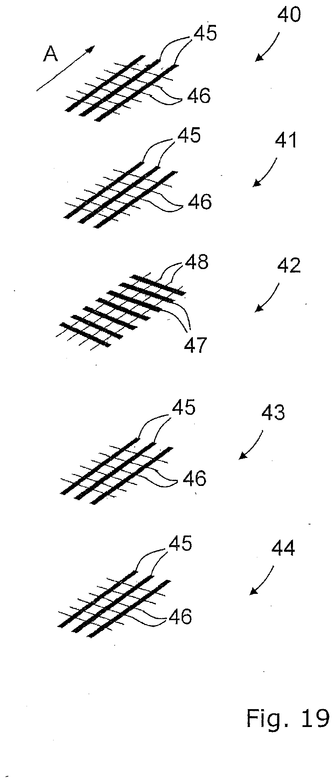

The orientation of carbon-fibers in the prepreg-layers influences the strength and stiffness of the composite material. In preferred embodiments, for example as shown in Figure 19, several unidirectional composite layers 40, 41, 42, 43, 44 are formed, wherein the layers are arranged so that all carbon-fibers 45, 47 in the prepreg-layers run at least almost in one direction, which for example for the layers 40, 41, 43, 44 is the longitudinal direction A of the gripper band 1 and for the layer 42 is the direction perpendicular to the longitudinal direction A. In order to keep the carbon fibers 45, 47 at distance and furthermore to keep as straight as possible, thin flexible fibers 46, 48 are provided, for example glass fibers or polyester fibers. A cloth is formed by the carbon fibers 45, 47 and the fibers 46, 48. In other embodiments a bidirectional arrangement is provided, for example an arrangement wherein all fibers consist of carbon fibers. In the context of the application a "prepreg-layer" means a "pre-impregnated layer", for example an individual layer with a fabric that is impregnated with a resin that is in a condition to make a composition of different layers stacked on top of each other. Thereafter, these layers can be treated, for example by thermal treatment and/or pressure treatment, so that an integral structure of composite material can be obtained. The prepreg-layers 40 to 44 each have a stiff main direction in relation to the carbon-fiber direction, and different prepreg-layers 40 to 44 having a different stiff main direction are laid one on top of each other, so that they are oriented in a correct way, this means some parallel to the longitudinal direction of the gripper band and others perpendicular thereto, so that an optimal strength of the gripper band 1 in specific directions can be obtained.

In all embodiments the gripper band 1 has one single integral structure formed of composite material. A gripper band according to the invention also offers the advantage that a bending stiffness in regions not wound along the drive wheel 6 (see Figure 1) is increased.

Although only a gripper 2 is shown, it is clear that the gripper 3 can be fixed to the gripper band 1 in a way similar to the way that the gripper 2 is fixed to the gripper band 1.

The gripper band 1 and the gripper unit 35 according to the invention are not limited to the embodiments described by way of example and shown in the drawings, but can also comprise variants and combinations of these embodiments that fall under the claims.

## Claims

1. Gripper band for a gripper weaving machine, wherein the gripper band (1) comprises a first part (13) and a second part (14), wherein the first part (13) is flexible for allowing the gripper band (1) to be wound along a drive wheel (6), wherein the second part (14) is adapted to carry a gripper (2, 3), wherein the first part (13) and the second part (14) both have a basic body (18, 20) with a rectangular cross-section with a bottom surface (180, 200), a top surface (181, 201) and two side surfaces (182, 202), and wherein two longitudinal ribs (21) are provided close to the two sides of the gripper band (1) at least at a bottom side (32) of the second part (14), wherein said two longitudinal ribs (21) protrude at least from the bottom surface (200) of the basic body (20) of the second part (14), **characterized in that** the gripper band (1) comprising the first part (13), the second part (14), and the longitudinal ribs (21) is one single, integral structure formed of composite material, and **in that** a thickness of the basic body (20) of the second part (14) near a centerline (31) of the gripper band (1) is larger than a thickness of the basic body (18) of the first part (13) near the centerline (31) of the gripper band (1), wherein the bottom surface (200) of the basic body (20) of the second part (14) is offset from the bottom surface (180) of the basic body (18) of the first part (13) and/or the top surface (201) of the basic body (20) of the second part (14) is offset from the top surface (181) of the basic body (18) of the first part (13), so that near the centerline (31) the thickness of the basic body (20) of the second part (14) is larger than the thickness of the basic body (18) of the first part (13).

2. Gripper band according to claim 1, **characterized in that** the longitudinal ribs (21) are starting in a starting section (23) at the first part (13) and extend in the longitudinal direction of the gripper band (1) from the first part (13) towards the second part (14), wherein in particular the starting section (23) of the longitudinal ribs (21) is the section of the first part (13) closest to a tip (24) of the gripper band (1) which is still adapted to be used for driving the gripper band (1) by means of the drive wheel (6).

3. Gripper band according to claim 2, **characterized in that** the first part (13) of the gripper band (1) is provided with a row of holes (16) arranged near the centerline (31) of the gripper band (1), which holes (16) are adapted to cooperate with teeth provided at the drive wheel (6), wherein the row of holes (16) ends in a section (25) of the gripper band (1), which is closer to the tip (24) than the starting section (23) of the longitudinal ribs (21).

4. Gripper band according to claim 1, 2 or 3, **characterized in that** the bottom surface (200) of the basic body (20) of the second part (14) is offset from the bottom surface (180) of the basic body (18) of the first part (13) and a transition part (15) is provided between the first part (13) and the second part (14), wherein a bottom surface (190) of the transition part (15) is at least in a portion offset from the bottom surface (180) of the basic body (18) of the first part (13) for increasing a thickness of the gripper band (1) near the centerline (31).

5. Gripper band according to claim 4, **characterized in that** in said portion a lower surface groove (29) is provided near the centerline (31), wherein an upper boundary surface (290) of the lower surface groove (29) is at the same level as the bottom surface (180) of the basic body (18) of the first part (13).

6. Gripper band according to claim 4 or 5, **characterized in that** the transition part (15) comprises at least one inclined surface (27) for continuously increasing the thickness of the gripper band (1) in side regions (270) adjacent to the lower surface groove (29).

7. Gripper band according to any one of claims 1 to 6, **characterized in that** the top surface (201) of the basic body (20) of the second part (14) and the top surface (181) of the basic body (18) of the first part (13) are arranged at the same level.

8. Gripper band according to any one of claims 1 to 6, **characterized in that** the top surface (201) and the bottom surface (200) of the basic body (20) of the second part (14) are both offset from the top surface (181) and the bottom surface (180) of the basic body (18) of the first part (13).

9. Gripper band according to claim 1 or 8, **characterized in that** the top surface (201) of the basic body (20) of the second part (14) is offset from the top surface (181) of the basic body (18) of the first part (13), and a transition part (15) is provided between the first part (13) and the second part (14), wherein a top surface (191) of at least a portion of the transition part (15) is offset from the top surface (181) of the basic body (18) of the first part (13) for increasing a thickness of the gripper band (1), wherein preferably in said portion an upper surface groove (30) is provided near the centerline (31), wherein a lower boundary surface (300) of the upper surface groove (30) is at the same level as the top surface (181) of the basic body (18) of the first part (13).

10. Gripper band according to claim 9, **characterized in that** the transition part (15) comprises at least one inclined surface (28) for continuously increasing the thickness of the gripper band (1) at the top side (33) and/or comprises at least one inclined surface (27) for continuously increasing the thickness of the gripper band (1) in side regions (270) adjacent to the upper surface groove (30) at the bottom side (32).

11. Gripper band according to any one of claims 1 to 10, **characterized in that** the second part (14) is provided with mounting holes (17) adapted to receive fastening elements, in particular screws (36), for mounting a gripper (2, 3).

12. Gripper band according to any one of claims 1 to 11, **characterized in that** the longitudinal ribs (21) are provided with inclined entry surfaces (26) extending from the bottom surface (180) of the basic body (18) of the first part (13).

13. Gripper band according to any one of claims 1 to 12, **characterized in that** the composite material is made of bound prepreg-layers arranged on top of each other, in particular a composition of prepreg-carbon-layers.

14. Gripper band according to claim 13, **characterized in that** some prepreg-layers have carbon-fibers that are arranged in parallel to each other in longitudinal direction and other prepreg-layers have carbon-fibers that are arranged in parallel to each other at an angle to the longitudinal direction, in particular perpendicular to the longitudinal direction.

15. Gripper unit for a gripper weaving machine comprising a gripper (2, 3) and a gripper band (1) according to any one of claims 1 to 14, wherein the gripper (2, 3) is mounted to the second part (14).

16. Gripper unit according to claim 15, **characterized in that** the gripper unit (35) further comprises a guide element (34) extending in the prolongation of the gripper band (1), wherein the guide element (34) is mounted to the gripper (2, 3).

## Patentansprüche

1. Greiferband für eine Greiferwebmaschine, wobei das Greiferband (1) einen ersten Teil (13) und einen zweiten Teil (14) umfasst, wobei der erste Teil (13) flexibel ist, um es zu ermöglichen, dass das Greiferband (1) entlang eines Antriebsrads (6) gewickelt wird, wobei der zweite Teil (14) dazu ausgebildet ist, einen Greifer (2, 3) zu tragen, wobei der erste Teil (13) und der zweite Teil (14) beide einen Grundkörper (18, 20) mit rechteckigem Querschnitt mit einer unteren Fläche (180, 200), einer oberen Fläche (181, 201) und zwei Seitenflächen (182, 202) haben, und wobei zwei Längsrippen (21) in der Nähe der beiden Seiten des Greiferbandes (1) mindestens an einer Unterseite (32) des zweiten Teils (14) vorgesehen sind, wobei die genannten zwei Längsrippen (21) mindestens vom unteren Fläche (200) des Grundkörpers (18) des zweiten Teils (14) herausragen, **dadurch gekennzeichnet, dass** das Greiferband (1) umfassend den ersten Teil (13), den zweiten Teil (14), und die Längsrippen (21) eine einzige, integrale Struktur ist, die aus Verbundmaterial gebildet ist, und dass eine Dicke des Grundkörpers (20) des zweiten Teils (14) nahe einer Mittellinie (31) des Greiferbandes (1) grösser ist als eine Dicke des Grundkörpers (18) des ersten Teils (13) nahe der Mittellinie (31) des Greiferbandes (1), wobei die untere Fläche (200) des Grundkörpers (20) des zweiten Teils (14) zur unteren Fläche (180) des Grundkörpers (18) des ersten Teils (13) versetzt ist und/oder die obere Fläche (201) des Grundkörpers (20) des zweiten Teils (14) zur oberen Fläche (181) des Grundkörpers (18) des ersten Teils (13) versetzt ist, so dass nahe der Mittellinie (31) die Dicke des Grundkörpers (20) des zweiten Teils (14) grösser ist als die Dicke des Grundkörpers (18) des ersten Teils (13).

2. Greiferband nach Anspruch 1, **dadurch gekennzeichnet, dass** die Längsrippen (21) in einem Anfangsabschnitt (23) am ersten Teil (13) anfangen und sich in der Längsrichtung des Greiferbandes (1) vom ersten Teil (13) zum zweiten Teil (14) hin erstrecken, wobei insbesondere der Anfangsabschnitt (23) der Längsrippen (21) der Abschnitt des ersten Teils (13) ist, der einer Spitze (24) des Greiferbandes (1) am nächsten liegt die dazu noch ausgebildet ist, mittels des Antriebsrads (6) zum Antreiben des Greiferbandes (1) verwendet zu werden.

3. Greiferband nach Anspruch 2, **dadurch gekennzeichnet, dass** der erste Teil (13) des Greiferbandes (1) mit einer nahe der Mittellinie (31) des Greiferbandes (1) angeordneten Reihe von Löchern (16) vorgesehen ist, welche Löcher (16) dazu ausgebildet sind, mit am Antriebsrad (6) vorgesehenen Zähnen zusammenzuwirken, wobei die Reihe von Löchern (16) in einem Abschnitt (25) des Greiferbandes (1) endet, der näher an der Spitze (24) liegt als der Anfangsabschnitt (23) der Längsrippen (21).

4. Greiferband nach Anspruch 1, 2 oder 3, **dadurch gekennzeichnet, dass** die untere Fläche (200) des Grundkörpers (20) des zweiten Teils (14) zur unteren Fläche (180) des Grundkörpers (18) des ersten Teils (13) versetzt ist und zwischen dem ersten Teil (13) und dem zweiten Teil (14) ein Übergangsteil (15) vorgesehen ist, wobei eine untere Fläche (190) des Übergangsteils (15) mindestens in einem Anteil zur unteren Fläche (180) des Grundkörpers (18) des ersten Teils (13) versetzt ist zur Erhöhung einer Dicke des Greiferbandes (1) nahe der Mittellinie (31).

5. Greiferband nach Anspruch 4, **dadurch gekennzeichnet, dass** in dem genannten Anteil eine untere Flächennut (29) nahe der Mittellinie (31) vorgesehen ist, wobei eine obere Begrenzungsfläche (290) der unteren Flächennut (29) auf gleicher Höhe ist als die untere Fläche (180) des Grundkörpers (18) des ersten Teils (13).

6. Greiferband nach Anspruch 5, **dadurch gekennzeichnet, dass** der Übergangsteil (15) mindestens eine Schrägfläche (27) zur kontinuierlichen Erhöhung der Dicke des Greiferbandes (1) in Seitenbereichen (270) neben der unteren Flächennut (29) umfasst.

7. Greiferband nach einem der Ansprüche 1 bis 6, **dadurch gekennzeichnet, dass** die obere Fläche (201) des Grundkörpers (20) des zweiten Teils (14) und die obere Fläche (181) des Grundkörpers (18) des ersten Teils (13) auf gleicher Höhe angeordnet sind.

8. Greiferband nach einem der Ansprüche 1 bis 6, **dadurch gekennzeichnet, dass** die obere Fläche (201) und die untere Fläche (200) des Grundkörpers (20) des zweiten Teils (14) beide zu der oberen Fläche (181) und der unteren Fläche (180) des Grundkörpers (18) des ersten Teils (13) versetzt sind.

9. Greiferband nach Anspruch 1 oder 8, **dadurch gekennzeichnet, dass** die obere Fläche (201) des Grundkörpers (20) des zweiten Teils (14) zur oberen Fläche (181) des Grundkörpers (18) des ersten Teils (13) versetzt ist, und zwischen dem ersten Teil (13) und dem zweiten Teil (14) ein Übergangsteil (15) vorgesehen ist, wobei eine obere Fläche (191) von mindestens einem Anteil des Übergangsteils (15) zur oberen Fläche (181) des Grundkörpers (18) des ersten Teils (13) versetzt ist zur Erhöhung einer Dicke des Greiferbandes (1), wobei vorzugsweise in dem genannten Anteil eine obere Flächennut (30) nahe der Mittellinie (31) vorgesehen ist, wobei eine untere Begrenzungsfläche (300) der oberen Flächennut (30) auf gleicher Höhe ist als die obere Fläche (181) des Grundkörpers (18) des ersten Teils (13).

10. Greiferband nach Anspruch 9, **dadurch gekennzeichnet, dass** der Übergangsteil (15) mindestens eine Schrägfläche (28) zur kontinuierlichen Erhöhung der Dicke des Greiferbandes (1) an der Oberseite (33) und/oder mindestens eine Schrägfläche (27) zur kontinuierlichen Erhöhung der Dicke des Greiferbandes (1) in Seitenbereichen (270) neben der oberen Flächennut (30) an der Unterseite (32) umfasst.

11. Greiferband nach einem der Ansprüche 1 bis 10, **dadurch gekennzeichnet, dass** der zweite Teil (14) mit Montagelöchern (17) vorgesehen ist, die zur Aufnahme von Befestigungselementen, insbesondere Schrauben (36), zur Montage eines Greifers (2, 3) ausgebildet sind.

12. Greiferband nach einem der Ansprüche 1 bis 11, **dadurch gekennzeichnet, dass** die Längsrippen (21) mit schrägen Eintrittsflächen (26) vorgesehen sind, die sich von der unteren Fläche (180) des Grundkörpers (18) des ersten Teils (13) erstrecken.

13. Greiferband nach einem der Ansprüche 1 bis 12, **dadurch gekennzeichnet, dass** das Verbundmaterial aus übereinander angeordneten, gebundenen Prepreg-Schichten, insbesondere einer Zusammensetzung von Prepreg-Kohlenstoff-Schichten, hergestellt ist.

14. Greiferband nach Anspruch 13, **dadurch gekennzeichnet, dass** einige Prepreg-Schichten Kohlenstofffasern aufweisen, die parallel zueinander in Längsrichtung angeordnet sind und andere Prepreg-Schichten Kohlenstofffasern aufweisen, die in einem Winkel zur Längsrichtung parallel zueinander angeordnet sind, insbesondere senkrecht zur Längsrichtung.

15. Greifereinheit für eine Greiferwebmaschine umfassend einen Greifer (2, 3) und ein Greiferband (1) nach einem der Ansprüche 1 bis 14, wobei der Greifer (2, 3) an dem zweiten Teil (14) montiert ist.

16. Greifereinheit nach Anspruch 15, **dadurch gekennzeichnet, dass** die Greifereinheit (35) weiter ein sich in der Verlängerung des Greiferbandes (1) erstreckendes Führungselement (34) umfasst, wobei das Führungselement (34) an dem Greifer (2, 3) montiert ist.

## Revendications

1. Lance pour une machine à tisser à pinces, dans laquelle la lance (1) comprend une première partie (13) et une deuxième partie (14), dans laquelle la première partie (13) est flexible pour permettre à la lance (1) d'être enrouler le long d'une roue de commande (6), dans laquelle la deuxième partie (14) est adaptée pour porter une pince (2, 3), dans laquelle la première partie (13) et la deuxième partie (14) ont toutes deux un corps de base (18, 20) avec une section transversale rectangulaire avec une surface inférieure (180, 200), une surface supérieure (181, 201) et deux surfaces latérales (182, 202), et dans laquelle deux nervures longitudinales (21) sont prévues à proximité des deux côtés de la lance (1) au moins sur un côté inférieur (32) de la deuxième partie (14), dans laquelle lesdites deux nervures longitudinales (21) font saillie au moins de la surface inférieure (200) du corps de base (20) de la deuxième partie (14), **caractérisée en ce que** la lance (1) comprenant la première partie (13), la deuxième partie (14), et les nervures longitudinales (21) est une structure unique, formée intégrale d'un matériau composite, et **en ce qu'**une épaisseur du corps de base (20) de la deuxième partie (14) près d'une ligne centrale (31) de la lance (1) est plus grande q'une épaisseur du corps de base (18) de la première partie (13) près de la ligne centrale (31) de la lance (1), dans laquelle la surface inférieure (200) du corps de base (20) de la deuxième partie (14) est décalée de la surface inférieure (180) du corps de base (18) de la première partie (13) et/ou la surface supérieure (201) du corps de base (20) de la deuxième partie (14) est décalée de la surface supérieure (181) du corps de base (18) de la première partie (13), de sorte que, près de la ligne centrale (31), l'épaisseur du corps de base (20) de la deuxième partie (14) est plus grande que l'épaisseur du corps de base (18) de la première partie (13).

2. Lance selon la revendication 1, **caractérisée en ce que** les nervures longitudinales (21) commencent dans une section de départ (23) au niveau de la première partie (13) et s'étendent dans la direction longitudinale de la lance (1) de la première partie (13) vers la deuxième partie (14), dans laquelle en particulier la section de départ (23) des nervures longitudinales (21) est la section de la première partie (13) la plus proche d'une pointe (24) de la lance (1) qui est encore adaptée pour être utilisée pour entraîner la lance (1) au moyen de la roue de commande (6).

3. Lance selon la revendication 2, **caractérisée en ce que** la première partie (13) de la lance (1) est prévue d'une rangée de trous (16) disposée près de la ligne centrale (31) de la lance (1), quels trous (16) sont adaptés pour coopérer avec des dents prévues au niveau de la roue de commande (6), dans laquelle la rangée de trous (16) se termine dans une section (25) de la lance (1), qui est plus proche de la pointe (24) que la section de départ (23) des nervures longitudinales (21).

4. Lance selon la revendication 1, 2 ou 3, **caractérisée en ce que** la surface inférieure (200) du corps de base (20) de la deuxième partie (14) est décalée de la surface inférieure (180) du corps de base (18) de la première partie (13) et une partie de transition (15) est prévue entre la première partie (13) et la deuxième partie (14), dans laquelle une surface inférieure (190) de la partie de transition (15) est au moins dans une portion décalée de la surface inférieure (180) du corps de base (18) de la première partie (13) pour augmenter une épaisseur de la lance (1) près de la ligne centrale (31).

5. Lance selon la revendication 4, **caractérisée en ce que** dans ladite portion, une rainure de surface inférieure (29) est prévue près de la ligne centrale (31), dans laquelle une surface limite supérieure (290) de la rainure de surface inférieure (29) est au même niveau que la surface inférieure (180) du corps de base (18) de la première partie (13).

6. Lance selon la revendication 5, **caractérisée en ce que** la partie de transition (15) comprend au moins une surface inclinée (27) pour augmenter en continue l'épaisseur de la lance (1) dans les régions latérales (270) adjacentes à la rainure de surface inférieure (29).

7. Lance selon l'une quelconque des revendications 1 à 6, **caractérisée en ce que** la surface supérieure (201) du corps de base (20) de la deuxième partie (14) et la surface supérieure (181) du corps de base (18) de la première partie (13) sont disposées au même niveau.

8. Lance selon l'une quelconque des revendications 1 à 6, **caractérisée en ce que** la surface supérieure (201) et la surface inférieure (200) du corps de base (20) de la deuxième partie (14) sont toutes deux décalées de la surface supérieure (181) et de la surface inférieure (180) du corps de base (18) de la première partie (13).

9. Lance selon la revendication 1 ou 8, **caractérisée en ce que** la surface supérieure (201) du corps de base (20) de la deuxième partie (14) est décalée de la surface supérieure (181) du corps de base (18) de la première partie (13), et une partie de transition (15) est prévue entre la première partie (13) et la deuxième partie (14), dans laquelle une surface supérieure (191) d'au moins une portion de la partie de transition (15) est décalée de la surface supérieure (181) du corps de base (18) de la première partie (13) pour augmenter une épaisseur de la lance (1), dans laquelle de préférence dans ladite portion, une rainure de surface supérieure (30) est prévue près de la ligne centrale (31), dans laquelle une surface limite inférieure (300) de la rainure de surface supérieure (30) est au même niveau que la surface supérieure (181) du corps de base (18) de la première partie (13).

10. Lance selon la revendication 9, **caractérisée en ce que** la partie de transition (15) comprend au moins une surface inclinée (28) pour augmenter en continue l'épaisseur de la lance (1) sur le côté supérieur (33) et/ou comprend au moins une surface inclinée (27) pour augmenter en continue l'épaisseur de la lance (1) dans les régions latérales (270) adjacentes à la rainure de surface supérieure (30) sur le côté inférieur (32).

11. Lance selon l'une quelconque des revendications 1 à 10, **caractérisée en ce que** la deuxième partie (14) est prévue de trous de montage (17) adaptés pour recevoir des éléments de fixation, en particulier des vis (36), pour monter une pince (2, 3).

12. Lance selon l'une quelconque des revendications 1 à 11, **caractérisée en ce que** les nervures longitudinales (21) sont prévues de surfaces d'entrée inclinées (26) s'étendant de la surface inférieure (180) du corps de base (18) de la première partie (13).

13. Lance selon l'une quelconque des revendications 1 à 12, **caractérisée en ce que** le matériau composite est constitué de couches préimprégnées liées qui sont disposées les unes sur les autres, en particulier une composition de couches de préimprégné-carbone.

14. Lance selon la revendication 13, **caractérisée en ce que** certaines couches préimprégnées ont des fibres de carbone qui sont disposées parallèlement les unes aux autres dans la direction longitudinale et d'autres couches préimprégnées ont des fibres de carbone qui sont disposées parallèlement les unes aux autres selon un angle par rapport à la direction longitudinale, en particulier perpendiculairement à la direction longitudinale.

15. Unité de pinces pour une machine à tisser à pinces comprenant une pince (2, 3) et une lance (1) selon l'une quelconque des revendications 1 à 14, dans laquelle la pince (2, 3) est montée sur la deuxième partie (14).

16. Unité de pinces selon la revendication 15, **caractérisée en ce que** l'unité de pinces (35) comprend en outre un élément de guidage (34) s'étendant dans le prolongement de la lance (1), dans laquelle l'élément de guidage (34) est monté sur la pince (2, 3).
